# EUROPEAN PATENT SPECIFICATION

(11) **EP 3 702 669 B1**
(45) Date of publication and mention of the grant of the patent: **03.08.2022**
(21) Application number: 19160049.3
(22) Date of filing: 28.02.2019
(51) Int. Cl.: F23R 3/28, F02C 3/14, F02C 6/00, F02C 7/228, F23C 6/04, F23R 3/34, F23R 3/36, F23R 3/46, F23R 3/50, F02C 9/40

(54) **METHOD FOR OPERATING A SEQUENTIAL COMBUSTOR OF A GAS TURBINE AND A GAS TURBINE COMPRISING THIS SEQUENTIAL COMBUSTOR**
VERFAHREN ZUM BETRIEB EINER SEQUENZIELLEN BRENNKAMMER EINER GASTURBINE UND GASTURBINE MIT DIESER SEQUENZIELLEN BRENNKAMMER
PROCÉDÉ DE FONCTIONNEMENT D'UNE CHAMBRE DE COMBUSTION SÉQUENTIELLE D'UNE TURBINE À GAZ ET TURBINE À GAZ COMPRENANT CETTE CHAMBRE DE COMBUSTION SÉQUENTIELLE

(43) Date of publication of application: 02.09.2020
(73) Proprietor: Ansaldo Energia Switzerland AG, 5401 Baden (CH)
(72) Inventor: CIANI, Andrea, 8057 ZÜRICH (CH); BOTHIEN, Mirko Ruben, 8037 ZÜRICH (CH)
(74) Representative: Martini, Gabriele

(56) References cited:
- EP-A1- 2 208 934
- EP-A1- 2 894 405
- EP-A1- 3 015 772
- EP-A2- 2 169 314
- WO-A1-2014/001230

## Description

### Field of the Invention

The present invention relates to the technical field of the gas turbine assemblies for power plants. In particular, the present invention relates to a method for operating a sequential combustor for a gas turbine wherein this sequential combustor comprises an upstream first combustor (upstream combustor) configured for receiving the compressed air and mixing this air with fuel and a downstream second combustor (or reheat combustor) configured for receiving the hot gas leaving the first combustor and adding fuel into this hot gas for performing a self/spontaneous ignition. More in detail the present invention refers to a method for operating the above first/second combustors when these combustors are fed by a hydrogen-based fuel.

### Description of prior art

As known, a gas turbine assembly for power plants (in the following only gas turbine) comprises a rotor provided with a compressor unit, a combustor unit and at least a turbine unit. The compressor is configured for compressing air supplied at a compressor inlet. The compressed air leaving the compressor flows into a plenum and from there into a combustor. The combustor comprises a plurality of burners configured for injecting fuel in the compressed air. The mixture of fuel and compressed air flows into a combustion chamber where this mixture is combusted. The resulting hot gas leaves the combustion chamber and is expanded in the turbine performing work on the rotor. As known, the turbine comprises a plurality of stages, or rows, of rotor blades that are interposed by a plurality of stages, or rows, of stator vanes. The rotor blades are connected to the rotor whereas the stator vanes are connected to a vane carrier that is a concentric casing surrounding the turbine unit.

In order to achieve a high efficiency, a high turbine inlet temperature is required. However, in general this high temperature involves an undesired high NOx emission level. In order to reduce this emission and to increase operational flexibility without decreasing the efficiency, the so called "sequential" gas turbines is particularly suitable. In general, a sequential gas turbine comprises two combustors or combustion stages in series wherein each combustor is provided with a plurality of burners and with at least a relative combustion chamber. Following the main gas flow direction, usually the upstream or first combustor comprises a plurality of so-called "premix" burners. The term "premix" emphasizes the fact that each burner of the first combustor is configured not only for injecting the fuel directly in the compressed air (for instance with a so called diffusion flame) but also for mixing (with a swirl) the compressed air and the fuel before injecting the mixture into the combustion chamber. Therefore in the following with the terms "premix burner" we mean the burner in the first stage of the sequential combustor wherein each premix burner is configured for receiving the compressed air and injecting fuel in this coming air for realizing a diffusion flame (e.g. by pilot lance without any premix) and/or a premix flame. This kind of premix burner is today widely used because a diffusion flame is useful under some condition (for instance during the cold starting operation) whereas a premix flame allows to reduce the NOx emissions during the normal operation. The downstream or second combustor is called "reheat" or "sequential" combustor and it is fed by the hot gas leaving the first combustor. Also, the reheat combustor is provided with a plurality of reheat burners configured for injecting fuel in the hot gas coming from the first combustor. Due to the high gas temperature, the operating conditions downstream the reheat burners allow a self/spontaneous ignition of the fuel/air mixture. Also these reheat burners are configured for performing a premix for the hot gas and the fuel before the spontaneous ignition. Therefore in the following with terms reheat burners we mean only the burners at the second stage of combustion in the sequential combustor.

Today two different kinds of sequential gas turbines are known. According to the first embodiment the premix and reheat combustors are annular shaped and are physically separated by a stage of turbine blades, called high pressure turbine. According to a second embodiment, the gas turbine is not provided with the high pressure turbine and the combustor unit is realized in form of a plurality of can-combustors. In this embodiment each can-combustor comprises a premix (first stage) and the reheat (second stage) combustor arranged directly one downstream the other inside the common can shaped casing. In both embodiments the burners are configured for injecting different kinds of fuel, i.e. liquid and gas fuel, and carrying air, i.e. a little part of the compressed air leaving the compressor. In view of the above, the burners are provided with separated channels or ducts for feeding the gas fuel, liquid fuel and carrying air to relevant burner nozzles.

Starting from the above mentioned structures of sequential gas turbines, today is present the need of improving the fuel flexibility while keeping low emission and high performance. In particular, a real challenge today is to use a highly reactive fuel, e.g. with high amounts of H2 or higher hydrocarbons (e.g. ethane, propane). Indeed, the increasing use of renewables for energy production is also accompanied by an increasing need for flexible power production, while aiming at carbon free emissions. The potential solutions of energy storage of excess generation from renewables through hydrogen production and precombustion carbon capture are gaining momentum. Both scenarios require gas turbines capable of operation with hydrogen-based fuels. At the same time, the composition of natural gas considered for use within gas turbines is becoming significantly more variable due to increased use of liquefied natural gas and a wider range of gas sources and extraction methods. Fuel flexibility, both in terms of the amount of hydrogen and higher hydrocarbons is therefore of utmost importance in modern gas turbine development.

A change in fuel reactivity implies a change in flame location. In particular, higher fuel reactivity (like H2) forces the flame to move upstream, increasing NOx emissions, and potentially overheating the burners. Consequently, when burning highly reactive fuels (e.g. fuels containing large quantities of either higher hydrocarbons or hydrogen) the flame moves upstream compared to the case of natural gas, thus increasing the risk of flashback. Since the position of the flame in the reheat combustor can be effectively controlled by the temperature at the inlet of the reheat combustor (self/spontaneous ignition), by lowering the inlet temperature it is therefore possible to move the flame downstream. Therefore, the negative effect of higher fuel reactivity (flashback) in the reheat combustor can be compensated by lowering the first stage temperature. Moreover, also the premix combustor may be affected by flashback in this condition. According to the prior art practice, in order to mitigate the flashback risks by moving the flame back to its design position in the premix and in the reheat combustor is obtained by simply injecting less fuel in the first stage of combustion. In this way the position of the flame in the premix combustor is moved downstream and the inlet temperature of the second stage is lower.

According to the current prior art practice, only minor amounts of hydrogen are allowable in premix, non-reheat combustion system, therefore diffusion type combustors are used to generate electricity with particularly high amounts of hydrogen as fuel. However, this prior art practice generates high NOx emissions and therefore a large amounts of diluents (nitrogen, steam) need to be added in the gas flow and/or selective catalytic reduction devices have to be used to keep the NOx emissions below the limits. As known these remedies significantly reduce the efficiency of the gas turbine plant.

Summarizing, in case of highly reactive fuels e.g. hydrogen based fuels, the prior art practice gives the following suggestions:
- in case of generic premix systems it is not possible to use highly reactive fuels because of emission and flashback limits on the premix burners, requiring for major derating with detrimental effects on engine performance
- in sequential combustors, highly reactive fuels can be well used in the reheat combustor inlet temperature but beyond a certain limit the first combustor operation is limited by LBO;
- only in case of diffusion combustors (not premixed) it is possible to use a fuel having a high rate of H2 however with strong dilution with inerts. However, by using this kind of combustor it is not possible to reach the efficiency rate of a premix/reheat sequential combustor. Moreover, this solution is not considered today an acceptable solution in view of the detrimental impact on NOx generation and dilution requirements.

EP3015772A1 relates to a combustor arrangement for a gas turbine assembly, comprising a first burner, a first combustion chamber, a mixer for admixing a dilution gas to the hot gases leaving the first combustion chamber during operation, a second burner, and a second combustion chamber arranged sequentially in a fluid flow connection.

EP2169314A2 relates to a method of reducing emissions and flashback in a sequential combustion gas turbine and to a combustor for such a gas turbine. EP2169314A2 refers to a fuel having a high H2 content.

### Disclosure of the invention

Accordingly, a primary scope of the present invention is to provide a method for operating a sequential combustor for a gas turbine suitable for overcoming the drawbacks of the current prior art practice. In particular, the scope of the present invention is to provide a method for operating a sequential combustor for a gas turbine wherein the supplied fuel is a hydrogen-based fuel, for instance H2-based fuel having a % of H2 in vol. from 0% to 100%. More in detail, the scope of the present invention is to provide a method for operating a sequential combustor wherein the burners are operated in such a way that allows the system to perform at its optimum despite extreme changes in fuel reactivity.

The invention is carried out by a method for operating a sequential combustor for a gas turbine according to claim 1 and is defined by a gas turbine comprising a sequential combustor according to claim 7.

Referring to the first combustor, as known the supplied compressed air is the air leaving a compressor upstream arranged in the gas turbine with respect to the sequential combustor. The present invention does not provide any limitation referring to the shape of the first combustor and in the following description of the drawings two different embodiments of the claimed first combustor will be described. According to the present invention each burner of this first combustor may be a particular kind of burner, namely a so-called "premix" burner. It is clear for a skilled person in the field of the gas turbines that the definition "premix" burner means a burner configured for mixing the coming air and the injected fuel before the inlet of the combustion chamber. For instance, in order to generate this mixing the premix burner may comprise an outer conical casing configured for generating a swirl in the air flow wherein this conical casing is also provided with fuel injecting nozzles. In this way the air flow leaving the burner and entering the combustion chamber is already mixed with the injected fuel. Moreover, as known, a "premix" burner comprises also a pilot configured for injecting fuel directly in the air flow in the combustion chamber without any preliminary mixing feature. For instance, this pilot may be realized in form of a lance axially extending along the outer conical casing. Therefore, a premix burner according the present invention, and also according to the prior art, is a burner configured for generating to different kinds of flame in the combustion chamber, a so-called diffusion flame generated by the fuel injected by the pilot and a premix flame generated by the swirled mixture air/fuel. As known a premix burner may be operated to generate only a diffusion flame, only a premix flame or a combination of a diffusion and a premix flame with different rate of fuel supplied in the premix circuit and in the pilot circuit. During normal operation the premix flame is preferable due to a less NOx generation.

The present invention does not provide any limitation also referring to the shape of the second combustor. Each second burner according to the present invention is a burner configured for injecting fuel in the hot gas flow leaving the first combustor. Due to the high temperature of the hot gas leaving the first combustor, the second burner is mainly stabilized by spontaneous iginition.

According to the general aspect of the present invention, when the sequential combustor is fed by a hydrogen-based fuel the method for operating this sequential combustor comprises the following steps:
- switching off at least one of the first burners;
- operating the remaining active first burners for generating hybrid flames as combination of diffusion mode and premix mode combustion.

Preferably, at least one of the active first burners is operated so that a significant amount of fuel is burnt in diffusion mode, in particular at least 5% of the fuel fed to this first burner. Preferably fuel burnt in diffusion mode is about 20% of the fuel fed to this first burner.

According to a different embodiment, the hybrid flames may be realized by operating some first burners only in premix configuration and other burners only in diffusion configuration.

According to a different embodiment the hybrid flames may be realized by operating burners simultaneously in premix and in diffusion configuration wherein each burner may disclose a different ratios of diffusion/premix mode.

In addition to this operation mode of the first combustor, the present invention provides also an innovative operation mode of the sequential combustion system. In particular, this operation mode allows for maintaining the overall system NOx production under an acceptable value (i.e. without derating) even if the first stage of combustion is partly or completely performed in diffusion mode (i.e. a combustion mode generating high amounts of NOx). Therefore, according to the invention, the method comprises the step of controlling in a coordinate way the feeding of fuel to the first and the second combustor so that a parameter CF (Ci) defined by *AS·*Ø*FS*/Ø*CPSC* is optimized based on the specific emission requirements. AS is the ratio between the air flowing into the first combustor and the total combustor air; Ø*_{FS}* is the fuel-air equivalence ratio of the first combustor and Ø*_{CPSC}* is the fuel-air equivalence ratio of overall sequential combustor.

It is to be understood that both the foregoing general description and the following detailed description are exemplary, and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of a first embodiment of a gas turbine comprising a sequential combustor that can be operated according the method of the present invention;
- figure 2 is a schematic view of a second embodiment of a gas turbine comprising a sequential combustor that can be operated according the method of the present invention;
- figure 3 is a schematic view of the sequential combustor of the gas turbine disclosed in figure 2 in two different operation conditions;
- figures 4 and 5 are schematic views of a burner of the sequential combustor of figure 3 in two different operation conditions.

### Detailed description of preferred embodiments of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention.

Reference will now be made to the drawing figures to describe the present invention in detail.

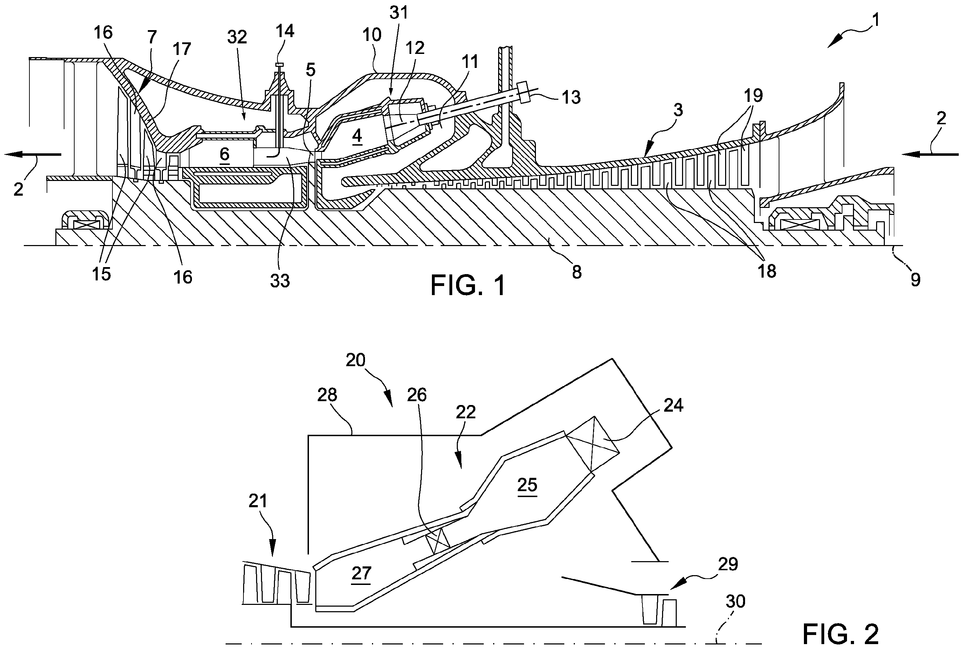

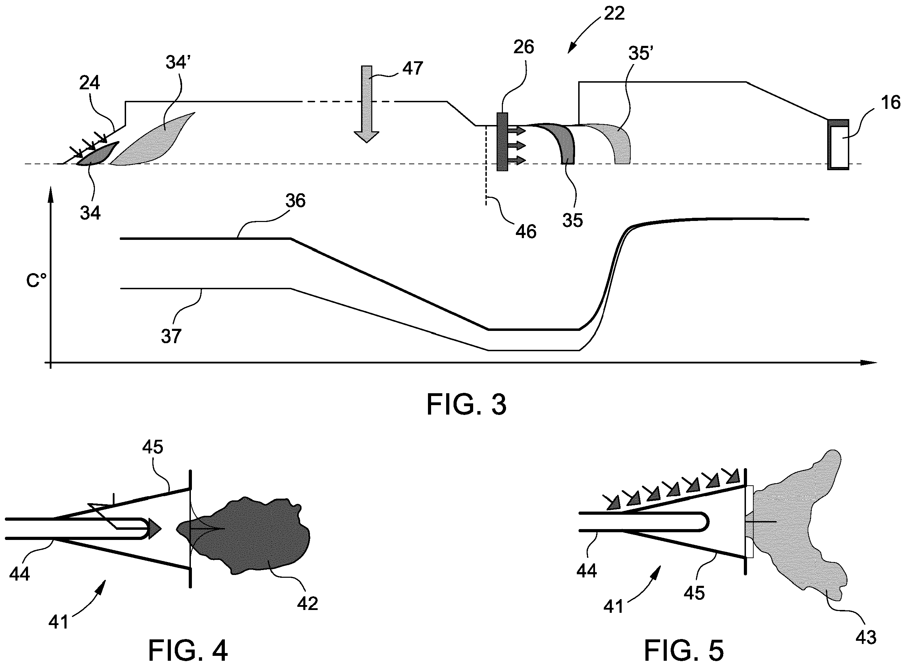

Reference is now made to Fig. 1 that is a schematic view of a first example of a gas turbine 1 comprising a sequential combustor that can be operated according to the method of the present invention. In particular, figure 1 discloses a gas turbine with a high pressure and a low pressure turbine. Following the main gas flow 2, the gas turbine 1 of figure 1 comprises a compressor 3, a first combustor 31, a high-pressure turbine 5, a second combustor 32 and a low-pressure turbine 7. The compressor 3 and the two turbines 5, 7 are part of or are connected to a common rotor 8 rotating around an axis 9 and surrounded by a concentric casing 10. The compressor 3 is supplied with air and is provided with rotating blades 18 and stator vanes 19 configured for compressing the air entering the compressor 3. Once left the compressor, the compressed air flows into a plenum 11 and from there into a plurality of first burners 12 of the first combustor 31 arranged as a ring around the axis 9. Each first burner 12 in configured for injecting fuel (supplied by a first fuel supply 13) in the air flow, in particular this first burner 12 may be defined as a "premix" burner because in configured for mixing the air and the injected fuel before the ignition point. Figures 4 and 5 (that will be described in the following) disclose an example of a premix burner according to the present invention. The fuel/compressed air mixture flows into a first combustion chamber 4 annularly shaped where this mixture are combusted via a forced ignition, for instance by a spark igniter. The resulting hot gas leaves the first combustor chamber 4 and is partially expanded in the high-pressure turbine 5 performing work on the rotor 8. Downstream of the high-pressure turbine 5 the hot gas partially expanded flows into a second burner 33 where fuel supplied by a fuel lance 14 is injected. The partially expanded gas has a high temperature and contains sufficient oxygen for a further combustion that occurred based on a self-ignition in the second combustion chamber 6 arranged downstream the second burner 33. This second burner 33 is also called "reheat" burner. The reheated hot gas leaves the second combustion chamber 6 and flows in the low-pressure turbine 7 where it is expanded performing work on the rotor 8. The low-pressure turbine 7 comprises a plurality of stages, or rows, of rotor blades 15 arranged in series in the main flow direction. Such stages of blades 15 are interposed by stages of stator vanes 16. The rotor blades 15 are connected to the rotor 8 whereas the stator vanes 16 are connected to a vane carrier 17 that is a concentric casing surrounding the low-pressure turbine 7.

Reference is now made to Fig. 2 that is a schematic view of a second example of a gas turbine 20 comprising a sequential combustor that can be operated according to the method of the present invention. In particular, figure 2 discloses a gas turbine 20 provided with a compressor 29, one turbine 21 and a sequential combustor 22. The sequential combustor 22 of figure 2 comprises a plurality of so-called can combustors, i.e. a plurality of cylindrical casings wherein each can combustor houses a plurality of first burners 24, for instance four first burners 24, a first combustion chamber 25, a second burner 26, and a second combustion chamber 27. Upstream the second burner 26 an air mixer (not represented) may be provided configured for adding air in the hot gas leaving the first combustion chamber 25. The sequential combustor arrangement is at least in part housed in an outer casing 28 supporting the plurality of can combustor 22 arranged as a ring around the turbine axis. A first fuel is introduced via a first fuel injector (not shown) into the first burners 24 wherein the fuel is mixed with the compressed gas supplied by the compressor 29. Also each first burner 24 of this embodiment is a "premix" burner configured for generating a premix flame and a diffusion flame. Each first burner 24 of figure 2 and each first burner 12 of figure 1 is independently operable, i.e. each first burner may be switched off independently on the other first burners and each first burner may be operated independently in terms of ratio between the fuel injected in the diffusion mode and the fuel injected in the premix mode. Finally, the hot gas leaving the second combustion chamber 27 expands in the turbine 21 performing work on a rotor 30.

Reference is now made to Fig. 3 that is a schematic view of a can combustor 22 that may be a combustor of the turbine of figure 2. In particular, figure 3 discloses the combustor in two different operation conditions, i.e. with two different flame positions inside the can combustor 22. Moreover, below figure 3 a diagram is present disclosing how the temperature varies in these two different operation conditions inside the can combustor 22. As known and as foregoing mentioned, the can combustor 22 is today preferable because it has significant advantages in terms of both low emissions and fuel flexibility. The first stage premixed burner 24 utilizes aerodynamic structures to stabilize a propagating premix flame providing excellent flame stability and combustion efficiency over an extensive operational range. This flame having a correct distance from the burner nozzles is represented by the reference 34'. The second burner 26 in contrast is a primarily auto-ignition controlled burner. The flame generated by the second burner 26 is represented by the reference 35'. These two contrasting methods of generating the flames provide a substantial advantage in minimising NOx emissions at base load while maximising the engine's turndown capability. The flexibility of the can combustor 22 can be applied to allow low emission performance for a wide range of fuels. For each fuel type an operational approach through the adjustment of the inlet temperature of the second burner 26 (temperature at ref. 46 after the reference 47 representing the air dilution mixer) can be defined which allows both flame locations to be correctly maintained. For fuels with high hydrogen contents the flames at the first 24 and the second burner 26 move upstream as represented by the references 34 and 35. These movement towards the burners involves some drawbacks, i.e. a high flame resident time (and therefore high NOx generation) and overheating of the burner nozzles. A solution to move downstream the flames 34 35 to a correct position of flames 34' 35' may be reducing the first stage flame temperature (reducing fuel injected in the first stage for passing from line 36 to line 37 in diagram of Figure 3). At the same time, it also accounts for the change in auto-ignition delay time and hence flame location of the second stage whose position for the same flame temperature can be controlled. If, for example, instead of natural gas hydrogen is burnt, the first stage temperature has to be reduced. As can be seen in Figure 3, reducing the first stage temperature alters the ignition delay time of the second stage in the desired way to keep the flame 35 at its design position 35'. In order to further increase the hydrogen content of the fuel up to 100% a lower second inlet temperature is required. However, according to the prior art practice this compensation is possible only for fuel having a limited % of H2 in Vol.

Advantageously, thanks to the hybrid flames as foregoing described in summary of the present invention (hybrid flames obtained by adjusting the distribution of fuel of some active burners between the various existing first stage fuel circuits) the lean blow out margin (low temperature) of the first stage is extended without any drawbacks of the prior art practice. Thanks to the present invention, the first stage can be operated with pure hydrogen fuel without injecting any diluents while delivering sufficiently lower inlet temperature levels for the second stage combustor.

Reference is now made to figures 4 and 5 that are schematic views of a first or premix burner suitable for performing the invention in two different operation conditions. According to this example the premix burner 41 is a burner configured for generating a diffusion flame 42 (figure 4) and a premix flame 43 (figure 5). For generating the diffusion flame 42 the fuel is directly injected in the combustion chamber by a pilot lance 44 without any preliminary mixing with the coming compressed air. For generating the premix flame 43, the fuel is mixed with the compressed air before entering the combustion chamber. For instance the mixing may be realized by passing the air in a conical casing 45 configured for generating a swirl wherein this conical casing 45 is also provided with nozzles for injecting fuel in this swirl. According the present invention, when the burner is fed by reactive fuels like H2-based fuels, the method comprises the step of switching off at least one of the first burners (for instance at least a burner for each can combustor) and operating the remaining active first burners for generating hybrid flames as combination of diffusion mode and premix mode. Preferably, at least one of active first burners is operated so that a significant amount of fuel is burnt in diffusion mode, in particular at least 5% of the fuel fed to this burner. According to a different embodiment, in a can combustor some burners on the first stage may be operated only in premix configuration and others only in diffusion configuration. According to a different embodiment, different burners may be operated simultaneously in premix and in diffusion configuration with different ratios of diffusion/premix mode. The switch-off of some of the first stage burners may be done with a specific pattern in order to optimize the temperature distribution.

According to the invention, the first stage NOx has a limited impact on the exit NOx, which is maintained at low levels thanks to a controlling step of the feeding of fuel to the first and the second combustor. In this context, Applicant defines a NOx reduction factor to the first stage emissions which is the ratio of the corrected NOx values, to 15% 02, before and after the second combustion under the theoretical assumption that it produces no NOx emissions. This parameter is of particular interest for quantifying the NOx contribution of the first stage to the overall combustor NOx production and for how controlling the second stage depending on the first. In general terms, the NOx CPSC reduction factor (CF) can be expressed as function of first stage and overall combustor equivalence ratios as follows *AS*·Ø*FS*/Ø*CPSC* wherein AS is the ratio between the air flowing into the first combustor and the total combustor air; Ø*_{FS}* is the fuel-air equivalence ratio of the first combustor and Ø*_{CPSC}* is the fuel-air equivalence ratio of overall sequential combustor. Thus the first stage contribution to the total combustor NOx *(NOxFS,t)* can be expressed as *NOxFS,exit*=*CF·NOxFS* where *NOxFS* is the NOx at the first stage exit, corrected to 15%02.

Preferably the parameter CF is at its optimum depending on the emissions limitations and between 2 and 7 depending on second inlet temperature.

## Claims

1. A method for operating a sequential combustor (22) for a gas turbine (1, 20); the method comprising the steps of:
a) providing a sequential combustor (22) comprising:
- a first combustor (31) provided with a plurality of first burners (12, 24) fed by compressed air and configured for injecting fuel in the compressed air in a diffusion mode (42) and in a premix mode (43);
- a second combustor (32) provided with a plurality of second burners (26, 33) fed by hot gas leaving the first combustor and configured for injecting fuel in the hot gas;
b) feeding the first (12, 24) and second burners (26, 33) with a hydrogen-based fuel;
**characterized in that** the method comprises the steps of:
c) switching off at least one of the first burners (12, 24);
d) operating the remaining active first burners so as to generate hybrid flames as combination of diffusion mode and premix mode.

2. Method as claimed in claim 1, wherein, at least one of the active first burners is operated so that a significant amount of fuel is burnt in diffusion mode, in particular at least 5% of the total amount of fuel fed to first combustor.

3. Method as claimed in any one of the foregoing claims, wherein some of the remaining active first burners (12, 24) are operated in premix mode (43) only and some of other remaining active first burners (12, 24) are operated in diffusion mode only (42).

4. Method as claimed in any one of the foregoing claims, wherein some of the remaining active first burners (12, 24) are hybrid operated in premix mode (43) and in diffusion mode (42), each first burner (12, 24) being operated with different ratios of diffusion/premix mode (42, 43) .

5. Method as claimed in claim 1, wherein the step b) is performed by feeding the active first burners (12, 24) and the second burners (26, 33) with a fuel comprising a ratio of hydrogen more than 50% in volume.

6. Method as claimed in claim 5, wherein the step b) is performed by feeding the active first burners (12, 24) and the second burners (26, 33) with a fuel consisting of 100% of hydrogen.

7. Gas turbine (1, 20) comprising a sequential combustor (22), the sequential combustor (22) comprising:
- a first combustor provided with a plurality of first burners (12, 24) fed by compressed air and configured for injecting fuel in the compressed air in a diffusion mode (42) and in a premix mode (43);
- a second combustor provided with a plurality of second burners (26, 33), fed by hot gas leaving the first combustor and configured for injecting fuel in the hot gas;
**characterized in that**
the gas turbine is provided with a control unit configured for switching off at least one of the first burners (12, 24) and for operating at least one of the remaining active first burners (12, 24) so as to generate hybrid flames as combination of diffusion mode and premix mode.

8. Gas turbine as claimed in claim 7, wherein the first and the second combustor are annular shaped and divided by a stage of turbine.

9. Gas turbine as claimed in claim 7, wherein the sequential combustor comprises a plurality of can combustors, each can combustor comprising the first and the second combustor divided by a dilution air mixer (47).

## Patentansprüche

1. Verfahren zum Betreiben einer sequentiellen Brennervorrichtung (22) für eine Gasturbine (1, 20); wobei das Verfahren die Schritte umfasst:
a) Bereitstellen einer sequentiellen Brennervorrichtung (22), umfassend:
- eine erste Brennervorrichtung (31), die mit mehreren ersten Brennern (12, 24) ausgestattet ist, die mit Druckluft gespeist werden und dazu konfiguriert sind, in einem Diffusionsmodus (42) und in einem Vormischmodus (43) Brennstoff in die Druckluft einzuspritzen;
- eine zweite Brennervorrichtung (32), die mit mehreren zweiten Brennern (26, 33) ausgestattet ist, die mit Heißgas gespeist werden, das die erste Brennervorrichtung verlässt, und dazu konfiguriert sind, Brennstoff in das Heißgas einzuspritzen;
b) Speisen der ersten (12, 24) und zweiten Brenner (26, 33) mit einem wasserstoff-basierten Brennstoff;
**dadurch gekennzeichnet, dass** das Verfahren die Schritte umfasst:
c) Abschalten wenigstens eines ersten Brenners (12, 24);
d) Betreiben der übrigen aktiven ersten Brenner so, dass Hybridflammen als Kombination aus Diffusionsmodus und Vormischmodus erzeugen werden.

2. Verfahren nach Anspruch 1, wobei wenigstens einer der aktiven ersten Brenner so betrieben wird, dass eine erhebliche Menge an Brennstoff im Diffusionsmodus verbrannt wird, insbesondere wenigstens 5 % der Gesamtmenge des Brennstoffs, der der ersten Brennervorrichtung zugeführt wird.

3. Verfahren nach einem der vorangehenden Ansprüche, wobei einige der übrigen aktiven ersten Brenner (12, 24) nur im Vormischmodus (43) betrieben werden und einige andere der übrigen aktiven ersten Brenner (12, 24) nur im Diffusionsmodus (42) betrieben werden.

4. Verfahren nach einem der vorangehenden Ansprüche, wobei einige der übrigen aktiven ersten Brenner (12, 24) im Vormischmodus (43) und im Diffusionsmodus (42) hybrid betrieben werden, wobei jeder erste Brenner (12, 24) mit unterschiedlichen Verhältnissen von Diffusion/VormischModus (42, 43) betrieben wird.

5. Verfahren nach Anspruch 1, wobei der Schritt b) durchgeführt wird, indem die aktiven ersten Brenner (12, 24) und die zweiten Brenner (26, 33) mit einem Brennstoff gespeist werden, der ein Wasserstoffanteil von mehr als 50 Vol.-% umfasst.

6. Verfahren nach Anspruch 5, wobei der Schritt b) durchgeführt wird, indem die aktiven ersten Brenner (12, 24) und die zweiten Brenner (26, 33) mit einem Brennstoff gespeist werden, der zu 100 % aus Wasserstoff besteht.

7. Gasturbine (1, 20), die eine sequentielle Brennervorrichtung (22) umfasst, wobei die sequentielle Brennervorrichtung (22) umfasst:
- eine erste Brennervorrichtung, die mit mehreren ersten Brennern (12, 24) ausgestattet ist, die mit Druckluft gespeist werden und dazu konfiguriert sind, in einem Diffusionsmodus (42) und in einem Vormischmodus (43) Brennstoff in die Druckluft einzuspritzen;
- eine zweite Brennervorrichtung, die mit mehreren zweiten Brennern (26, 33) ausgestattet ist, die mit Heißgas gespeist werden, das die erste Brennervorrichtung verlässt, und dazu konfiguriert sind, Brennstoff in das Heißgas einzuspritzen;
**dadurch gekennzeichnet, dass**
die Gasturbine mit einer Steuereinheit ausgestattet ist, die dazu konfiguriert ist, wenigstens einen ersten Brenner (12, 24) abzuschalten und wenigstens einen der übrigen aktiven ersten Brenner (12, 24) so zu betreiben, dass Hybridflammen als Kombination aus Diffusionsmodus und Vormischmodus erzeugt werden.

8. Gasturbine nach Anspruch 7, wobei die erste und die zweite Brennervorrichtung ringförmig sind und durch eine Turbinenstufe getrennt sind.

9. Gasturbine nach Anspruch 7, wobei die sequentielle Brennervorrichtung mehrere Becherbrennervorrichtungen umfasst, wobei jede Becherbrennervorrichtung die erste und die zweite Brennervorrichtung umfasst, die durch einen Verdünnungsluftmischer (47) getrennt sind.

## Revendications

1. Procédé destiné à actionner une chambre de combustion séquentielle (22) d'une turbine à gaz (1, 20), le procédé comprenant les étapes suivantes :
a) fournir une chambre de combustion séquentielle (22) comprenant :
- une première chambre de combustion (31) dotée d'une pluralité de premiers brûleurs (12, 24) alimentés en air comprimé, et configurés pour injecter un combustible dans l'air comprimé dans un mode diffusion (42) et dans un mode prémélange (43) ;
- une seconde chambre de combustion (32) dotée d'une pluralité de seconds brûleurs (26, 33) alimentés en gaz chauds qui quittent la première chambre de combustion, et configurés pour injecter le combustible dans les gaz chauds ;
b) alimenter les premiers (12, 24) et seconds (26, 33) brûleurs en combustible à base d'hydrogène ;
**caractérisé en ce que** le procédé comporte les étapes suivantes :
c) arrêter l'un au moins des premiers brûleurs (12, 24) ;
d) actionner les premiers brûleurs actifs restants afin de générer des flammes hybrides en tant que combinaison d'un mode diffusion et d'un mode prémélange.

2. Procédé selon la revendication 1, dans lequel, l'un au moins des premiers brûleurs actifs est actionné de telle sorte qu'une quantité importante de combustible soit brûlée dans le mode diffusion, en particulier au moins 5 % de la quantité totale de combustible fourni à la première chambre de combustion.

3. Procédé selon l'une quelconque des revendications précédentes, dans lequel certains des premiers brûleurs actifs restants (12, 24) sont actionnés seulement dans le mode prémélange (43), et certains des autres premiers brûleurs actifs restants (12, 24) sont actionnés seulement dans le mode diffusion (42).

4. Procédé selon l'une quelconque des revendications précédentes, dans lequel certains des premiers brûleurs actifs restants (12, 24) sont actionnés de manière hybride dans le mode prémélange (43) et dans le mode diffusion (42), chaque premier brûleur (12, 24) étant actionné selon différents rapports de mode diffusion / mode prémélange (42, 43).

5. Procédé selon la revendication 1, dans lequel l'étape b) est exécutée en alimentant les premiers brûleurs actifs (12, 24) et les seconds brûleurs (26, 33), en combustible comprenant un taux d'hydrogène supérieur à 50 % en volume.

6. Procédé selon la revendication 5, dans lequel l'étape b) est exécutée en alimentant les premiers brûleurs actifs (12, 24) et les seconds brûleurs (26, 33), en combustible composé de 100 % d'hydrogène.

7. Turbine à gaz (1, 20) comprenant une chambre de combustion séquentielle (22), la chambre de combustion séquentielle (22) comprenant :
- une première chambre de combustion dotée d'une pluralité de premiers brûleurs (12, 24) alimentés en air comprimé, et configurés pour injecter un combustible dans l'air comprimé dans un mode diffusion (42) et dans un mode prémélange (43) ;
- une seconde chambre de combustion dotée d'une pluralité de seconds brûleurs (26, 33) alimentés en gaz chauds qui quittent la première chambre de combustion, et configurés pour injecter le combustible dans les gaz chauds ;
**caractérisée en ce que**
la turbine à gaz est dotée d'une unité de commande configurée pour arrêter l'un au moins des premiers brûleurs (12, 24), et pour actionner l'un au moins des premiers brûleurs actifs restants (12, 24), afin de générer des flammes hybrides en tant que combinaison d'un mode diffusion et d'un mode prémélange.

8. Turbine à gaz selon la revendication 7, dans laquelle les première et seconde chambres de combustion présentent une forme annulaire, et sont séparées par un étage de turbine.

9. Turbine à gaz selon la revendication 7, dans laquelle la chambre de combustion séquentielle comprend une pluralité de chambres de combustion tubulaires, chaque chambre de combustion tubulaire comprenant les première et seconde chambres de combustion séparées par un mélangeur d'air d'appoint (47).
